# EUROPÄISCHE PATENTSCHRIFT

(11) **EP 1 658 207 B1**
(45) Veröffentlichungstag und Bekanntmachung des Hinweises auf die Patenterteilung: **25.11.2009**
(21) Anmeldenummer: 04763761.6
(22) Anmeldetag: 04.08.2004
(51) Int. Cl.: B60R 22/24

(54) **UMLENKELEMENT FÜR SICHERHEITSGURTE MIT EINSTÜCKIGEM VERKLEIDUNGSTEIL**
DEFLECTOR ELEMENT FOR SAFETY BELTS, COMPRISING A SINGLE-COMPONENT LINING PART
ELEMENT DEFLECTEUR POUR CEINTURE DE SECURITE COMPORTANT UNE PARTIE D'HABILLAGE MONOBLOC

(30) Priorität: 26.08.2003 DE 10339562
(43) Veröffentlichungstag der Anmeldung: 24.05.2006
(73) Patentinhaber: AUTOLIV DEVELOPMENT AB, 447 83 Vargarda (SE)
(72) Erfinder: DÜRRER, Michael, 24536 Neumünster (DE); CORD, Hans-Jörg, 22848 Norderstedt (DE)
(74) Vertreter: Müller, Karl-Ernst
(86) Internationale Anmeldenummer: PCT/EP2004/008704
(87) Internationale Veröffentlichungsnummer: WO 2005/021338

(56) Entgegenhaltungen:
- EP-A- 0 174 126
- EP-A- 0 318 222
- DE-U- 20 205 570
- GB-A- 1 280 153
- PATENT ABSTRACTS OF JAPAN Bd. 2000, Nr. 22, 9. März 2001 (2001-03-09) -& JP 2001 138862 A (MUTSUMICHI KENKYUSHO:KK), 22. Mai 2001 (2001-05-22)

## Beschreibung

Die Erfindung betrifft ein Umlenkelement für einen Sicherheitsgurt in Kraftfahrzeugen, bestehend aus einem einstückigen Metallkörper mit einer Befestigungsöse und einem mit einer gerundeten Lauffläche versehenen Gurtführungsschlitz und aus einem aus Kunststoff bestehenden und an dem Metallkörper gehalterten Verkleidungsteil sowie aus einem die Spaltbreite für den Durchlauf des Gurtbandes durch den Gurtführungsschlitz begrenzenden Verdrängungskörper, wobei der Metallkörper an seinem die Lauffläche ausbildenden unteren Steg mit einem auswärts offenen C-förmigen Querschnitt ausgebildet ist.

Ein Umlenkelement mit den vorgenannten Merkmalen ist in der DE 202 05 570 U1 beschrieben. Um den die Gurtbandlast aufnehmenden und an dem Fahrzeug verankerten Metallkörper insbesondere auch bei einem innerhalb der Säule des Kraftfahrzeuges verdeckten oder halb verdeckten Einbau soweit abzudecken, dass keine Metallbereiche sichtbar sind, ist an dem Metallkörper ein Verkleidungsteil gehaltert, welches aus zwei aus Kunststoff bestehenden Seitenteilen besteht, die jeweils von der Seite her auf den Metallkörper aufgeschoben werden und an ihrer Stoßstelle über dort ausgebildete Steckverbindungen zusammengehalten sind. Zusätzlich wird der den die Befestigungsöse aufweisenden Bereich des Metallkörpers abdeckende Verdrängungskörper an dem Metallkörper festgelegt. Mit diesem Umlenkbeschlag ist der Nachteil verbunden, dass die beiden zur Ausbildung des Verkleidungsteils erforderlichen Einzelteile getrennt herzustellen und zu montieren sind, wobei die Montage auch deswegen umständlich ist, weil die Steckverbindung zwischen den Einzelteilen des Verkleidungsteils eingefädelt werden muss. Dies setzt eine passgenaue Herstellung nicht nur der Einzelteile des Verkleidungsteils, sondern auch des Metallkörpers voraus, damit die Steckverbindung bei der Montage des Umlenkbeschlages jeweils passt.

Weiterhin ist ein gattungsähnliches Umlenkelement aus der EP 0 318 222 A1 bekannt. Das bei diesem Umlenkelement kappenartig ausgebildete und auf den Körper des Umlenkelements aufzusetzende Verkleidungsteil weist an seinem oberen Ende einen Wandabschnitt auf, der eine am oberen Ende des Körpers ausgebildete Schulter übergreift und somit das Verkleidungsteil formschlüssig an dem Körper festlegt: Dem Wandabschnitt gegenüberliegend ist an dem Verkleidungsteil weiterhin ein Steg angeordnet, der in einen dem Gurtführungsschlitz benachbart angeordneten Schlitz des Körpers einschiebbar ist. Nachteilig bei diesem bekannten Umlenkelement ist, dass die formschlüssige Verbindung zwischen Wandabschnitt und Schulter einer genauen Bearbeitung der Teile bedarf, und dass insbesondere die Anordnung des Steges in dem im Bereich des an zusätzlich anzuordnenden Aufnahmeschlitz Gurtführungsschlitzes störend ist.

Der Erfindung liegt die Aufgabe zugrunde, bei einem Umlenkelement mit einem durch ein Verkleidungsteil abzudeckenden Bereich unterhalb des Gurtführungsschlitzes eine vereinfachte Herstellung und Montage zu schaffen.

Die Lösung dieser Aufgabe ergibt sich aus dem Anspruch 1; vorteilhafte Ausgestaltungen und Weiterbildungen sind in den Unteransprüchen angegeben.

Die Erfindung sieht hierzu bei einem Umlenkelement mit den gattungsgemäßen Merkmalen vor, dass das als einstückiger Körper mit den Metallkörper wenigstens teilweise einfassenden Randbereichen ausgebildete Verkleidungsteil an seinem den unteren Steg des Metallkörpers einfassenden Teil eine Nut zur Aufnahme der äußeren Wandung des C-förmigen Querschnitts aufweist, und dass das wenigstens in Teilbereichen nachgiebig ausgebildete Verkleidungsteil bei der Montage aufbiegbar und über den Metallkörper stülpbar ist derart, dass das Verkleidungsteil in montiertem Zustand an dem Metallkörper durch eine von den an dem Metallkörper anliegenden Randbereichen auf den Metallkörper ausgeübte Vorspannung festlegbar ist. Der Erfindung liegt somit das Konzept zugrunde, das Verkleidungsteil als ein von einer Flächenseite des Metallkörpers her auf dieses aufzubringendes und einheitliches und einstückiges Bauteil auszubilden, welches in nur einem Montageschritt an dem Metallkörper anzusetzen ist. Hierzu ist es lediglich erforderlich das aus Kunststoff bestehende und insoweit in einem gewissen Umfang nachgiebige Verkleidungsteil bei der Montage soweit aufzubiegen, dass es es über den Metallkörper stülpbar ist. Hieraus ergibt sich der Vorteil, dass jeweils nur ein Herstellungsschritt für die Herstellung des Verkleidungsteils sowie ein Montageschritt erforderlich sind.

Im einzelnen ist mit der Erfindung der Vorteil verbunden, dass im Bereich des unteren Steges des Metallkörpers eine formschlüssige Halterung des Verkleidungsteils an dem Metallkörper gegeben ist. Weiterhin ist das Verkleidungsteil in seinen Abmessungen derart ausgelegt, dass in montiertem Zustand seine Randbereiche mit Vorspannung an dem Metallkörper anliegen und dadurch das Verkleidungsteil an dem Metallkörper gehalten ist.

Die Halterung des Verkleidungsteils kann dadurch verbessert werden, dass an dem Verkleidungsteil Klipshalterungen zur Festlegung des Verkleidungsteils an dem Metallkörper ausgebildet sind; hierbei kann es zweckmäßig sein, wenn wenigstens ein Teil der den Metallkörper einfassenden Randbereiche selbst als Klipshalterungen ausgebildet ist.

Nach einem Ausführungsbeispiel der Erfindung ist vorgesehen, dass der Metallkörper an seinem den Gurtführungsschlitz zur Befestigungsöse hin begrenzenden oberen Steg einen mehrfach gewinkelten Verlauf mit einem zentrisch in den Gurtführungsschlitz vorstehenden Lappen mit in einem Winkel von etwa 45 Grad zur Längsachse des Gurtführungsschlitzes verlaufenden Begrenzungskanten aufweist und der Verdrängungskörper eine formentsprechende Kontur zur Abdeckung des die Befestigungsöse aufnehmenden Bereichs des Metallkörpers einschließlich des Lappens aufweist; hiermit ist der Vorteil verbunden, dass gegenüber der aus dem Stand der Technik bekannten Ausbildung des Metallkörpers zwischen den Begrenzungskanten und der Befestigungsöse jeweils mehr Fleisch belassen ist, wodurch die Festigkeit des Metallkörpers verbessert ist; entsprechend ist das Verdrängungsteil ausgebildet

In an sich bekannter Weise kann vorgesehen sein, dass der Verdrängungskörper in die Befestigungsöse des Metallkörpers hineinragende und eine Aufnahme für ein Befestigungsmittel ausbildende Vorsprünge aufweist.

Nach einem Ausführungsbeispiel der Erfindung ist vorgesehen, dass der Verdrängungskörper in seinem oberen, die Befestigungsöse einfassenden Bereich über die Kontur des Metallkörpers hervorstehenden Nasen als Begrenzung des Drehweges des im Kraftfahrzeug eingebauten Umlenkelementes um das Befestigungsmittel aufweist.

Im Hinblick auf die Erleichterung der Montage des Umlenkbeschlages kann nach einem Ausführungsbeispiel der Erfindung vorgesehen sein, dass das Verkleidungsteil in seinem die Befestigungsöse umfassenden Bereich eine durch einen Schlitz ausgebildete Teilung aufweist; diese Teilung erleichtert das Aufbiegen des Verkleidungsteils bei dem Überstülpen des Verkleidungsteils über den Metallkörper; bei dieser Ausführungsform ist der wie beim Stand der Technik getrennt ausgebildete Verdrängungskörper mit dem Metallkörper verklipst, wozu entsprechende Klipshalterungen vorgesehen sein können.

In einer Weiterbildung der Erfindung ist vorgesehen, dass der Verdrängungskörper mit dem Verkleidungsteil einstückig ist; in diesem Fall ist das Verkleidungsteil als geschlossenes Bauteil ausgebildet und vorzugsweise über entsprechend vorgesehene Klipshalterungen an dem Metallkörper festlegbar. Dabei kann in einem alternativen Herstellungsprozess vorgesehen sein, dass das Verkleidungsteil einschließlich Verdrängungskörper in einem Spritzvorgang um den Metallkörper herum ausgebildet wird, so dass hierdurch die einstückige Ausbildung von Verdrängungskörper und Verkleidungsteil verwirklicht ist.

In der Zeichnung sind Ausführungsbeispiele der Erfindung wiedergegeben, welche nachstehend beschrieben sind. Es zeigen:
- Fig. 1: den Metallkörper eines Umlenkbeschlages in einer Einzeldarstellung,
- Fig. 2: ein erstes Ausführungsbeispiel eines Verkleidungselements in einer Vorderansicht,
- Fig. 3: den Gegenstand der Figur 2 in Rückansicht,
- Fig. 4: das Verkleidungsteil gemäß Figur 2 bzw. Figur 3 in einer weiteren Gesamtansicht,
- Fig. 5: einen Verdrängungskörper in einer Vorderansicht,
- Fig. 6: den Gegenstand der Figur 5 in einer Gesamtansicht,
- Fig. 7: den Verdrängungskörper gemäß Figur 5 bzw. Figur 6 im an dem Metallkörper gemäß Figur 1 montierten Zustand,
- Fig. 8: ein weiteres Ausführungsbeispiel des Verdrängungskörpers in der Darstellung gemäß Figur 5,
- Fig. 9: den Verdrängungskörper gemäß Figur 8 in einer Gesamtansicht,
- Fig. 10: den Verdrängungskörper gemäß Figur 8 bzw. Figur 9 im an dem Metallkörper gemäß Figur 1 montierten Zustand,
- Fig. 11: das Verdrängungsteil in einer anderen Ausführungsform mit einstückig ausgebildetem Verdrängungskörper,
- Fig. 12: den Gegenstand der Figur 11 in einer Gesamtansicht,
- Fig. 13: das Verkleidungsteil einschließlich Verdrängungskörper gemäß Figur 11 bzw. Figur 12 im an dem Metallkörper gemäß Figur 1 montierten Zustand.

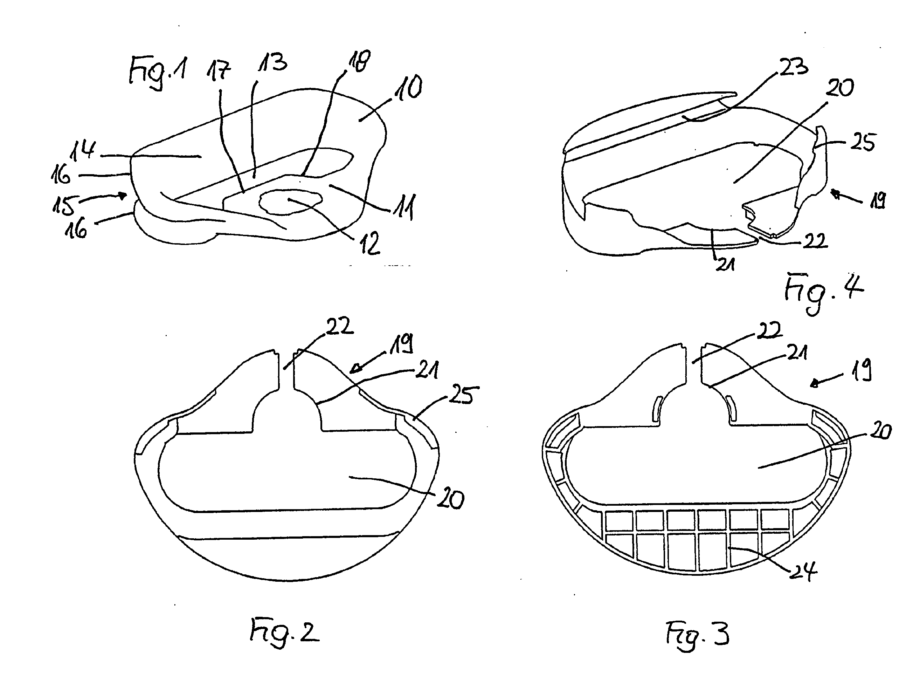

Aus Figur 1 ist zunächst der Metallkörper 10 eines Umlenkelementes für einen Sicherheitsgurt in Kraftfahrzeugen ersichtlich, der im Wesentlichen mit dem in dem gattungsgemäßen Stand der Technik nach DE 202 05 570 U1 übereinstimmt. Im Einzelnen weist der vorzugsweise aus Stahlblech im Wege der Kaltumformung hergestellte Metallkörper 10 einen flachen oberen Bereich 11 mit einer darin ausgebildeten Befestigungsöse 12 zum Durchgriff eines nicht dargestellten Befestigungsmittels für die Befestigung des Metallkörpers 10 an einem Fahrzeugteil auf. Anschließend an den oberen Bereich 11 erweitert sich der Metallkörper 10 durch Übergang in ein C-Profil 15 mit entsprechend voneinander beabstandeten Wandungen 16 in einen Bereich, in dem ein Gurtführungsschlitz 13 ausgebildet ist, wobei der durch das C-Profil 15 gebildete untere Steg 14 des Metallkörpers 10 eine insbesondere gerundete Lauffläche für das durch den Gurtführungsschlitz 13 geführte Gurtband des Sicherheitsgurtes aufweist. Die obere, zur Befestigungsöse 12 gerichtete Begrenzung des Gurtführungsschlitzes 13 wird durch einen mehrfach gewinkelten Verlauf mit einem zentrisch in den Gurtführungsschlitz 13 vorstehenden Lappen 14 mit in einem Winkel von etwa 45 Grad zur Längsachse des Gurtführungsschlitzes 13 verlaufenden Begrenzungskanten 18 gebildet, wobei durch diese Ausbildung zwischen den Begrenzungskanten und der Befestigungsöse ein größerer Materialbereich belassen wird, was die Stabilität des Metallkörpers 10 verbessert.

Aus den Figuren 2 bis 4 ist zunächst in einer ersten Ausführungsform ein einheitliches und einstückiges Verkleidungsteil 19 erkennbar, welches in seiner Kontur auf die Abmessungen des Metallkörpers 10 derart abgestimmt ist, dass es allein durch eine ausgeübte Vorspannung an dem Metallkörper 10 festliegt. Hierzu weist das Verkleidungsteil 19 neben einer den Gurtführungsschlitz 13 des Metallkörpers 10 einschließlich des den Lappen 17 ausbildenden Bereichs des Metallkörpers 10 aussparenden zentralen Öffnung 20 in seinem oberen Bereich viertelkreisförmige Begrenzungen 21 zum teilweisen Umschließen der Befestigungsöse 12 des Metallkörpers 10 auf, wobei die Begrenzungen 21 durch einen Schlitz 22 geteilt sind, so dass dadurch eine entsprechende Nachgiebigkeit des Verkleidungsteils 19 eingestellt ist. Über einen Teil seines Umfangs weist das Verkleidungsteil 19 die äußere Kontur des Metallkörpers einfassende Randbereiche 25 auf, ferner im Bereich seines den unteren Steg 14 des Metallkörpers 10 abdeckenden bzw. einfassenden Bereichs eine Nut 23 zur Aufnahme einer Wandung 16 des C-Profils 15, so dass in diesem Bereich eine formschlüssige Halterung des Verkleidungsteils 19 an dem Metallkörper 10 verwirklicht ist. Die weitere Halterung des Verkleidungsteils 19 an dem Metallkörper 10 wird über die von den Randbereichen 25 ausgeübte Vorspannung verwirklicht. Wie sich aus Figur 3 ergibt, ist das Verkleidungsteil 19 auf seiner in der Einbausituation nicht sichtbaren Seite nicht im Vollquerschnitt ausgeführt, sondern mit durch Materialaussparungen gebildeten Stegen 24.

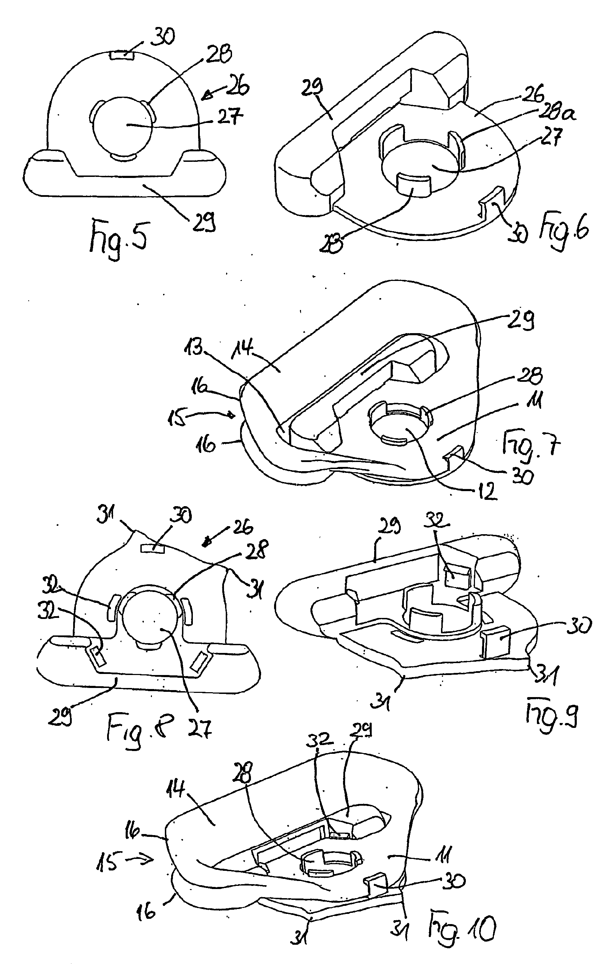

Entsprechend dem Stand der Technik gemäß der DE 202 05 570 U1 gehört zu dem in den Figuren 2 bis 4 dargestellten einteiligen Verkleidungsteil 19 ein in den Figuren 5 bis 7 bzw. 8 bis 10 in unterschiedlichen Ausführungsbeispielen dargestellter Verdrängungskörper 26, dessen Funktion im Einzelnen im Stand der Technik beschrieben ist. Der zur Abdeckung des oberen Bereichs 11 des Metallkörpers 10 vorgesehene Verdrängungskörper 26 hat eine im Montagezustand mit der Befestigungsöse 12 des Metallkörpers 10 fluchtende Öse 27, in deren Randbereich in die Befestigungsöse 12 des Metallkörpers 10 hineinreichende Vorsprünge 28 ausgebildet sind, mit denen im montierten Zustand verhindert wird, dass das Befestigungsmittel zur Befestigung des Umlenkbeschlages an dem fahrzeugfesten Teil mit dem Randbereich der Befestigungsöse im Metallkörper in Berührung kommt. Ferner weist der Verdrängungskörper 26 einen den Lappen 17 des Metallkörpers 10 übergreifenden und den Gurtführungsschlitz 13 des Metallkörpers 10 teilweise abdeckenden Begrenzungssteg 29 auf, mittels dessen die Spaltbreite des in dem Umlenkelement ausgebildeten Gurtschlitzes letztlich definiert ist. Zur Festlegung des Verdrängungskörpers 26 an dem Metallkörper 10 ist im Bereich des oberen Randes des Verdrängungskörpers 26 ein Klipsvorsprung 30 ausgebildet; zusätzlich sind auch die Vorsprünge 28 mit entsprechenden Klipshaken 28a versehen, so dass hierdurch der Verdrängungskörper 26 an dem Metallkörper 10 festlegbar ist.

Das in den Figuren 8 bis 10 dargestellte Ausführungsbeispiel des Verdrängungskörpers 26 unterscheidet sich von dem in den Figuren 5 bis 7 dargestellten Ausführungsbeispiel im Wesentlichen dadurch, dass der Verdrängungskörper 26 in seinem oberen, die Befestigungsöse 12 des Metallkörpers 10 einfassenden Bereich über die Kontur des Metallkörpers hervorstehenden Nasen 31 aufweist, die als Begrenzung des Drehweges des im Kraftfahrzeug eingebauten Umlenkelements um sein Befestigungsmittel dienen. Weiterhin sind zusätzliche im Bereich des Begrenzungssteges 29 angeordnete und die Begrenzungskanten 18 des Metallkörpers 10 einfassende Klipshalterungen 32 vorgesehen.

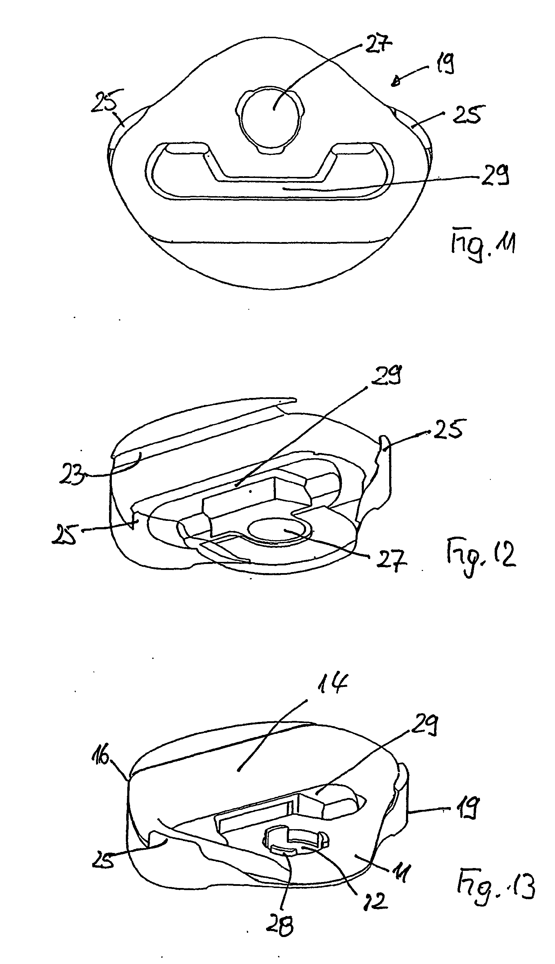

Bei dem in den Figuren 11 bis 13 schließlich dargestellten Ausführungsbeispiel sind Verkleidungsteil 19 und Verdrängungskörper 26 einstückig ausgebildet, so dass sich ein einheitliches Bauteil ergibt, welches in einem Herstellungsvorgang hergestellt werden kann, wobei nur ein einziger Montageschritt zur Herstellung des Umlenkelementes erforderlich ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Umlenkelement für einen Sicherheitsgurt in Kraftfahrzeugen, bestehend aus einem einstückigen Metallkörper (10) mit einer Befestigungsöse (12) und einem mit einer gerundeten Lauffläche versehenen Gurtführungsschlitz (13) und aus einem aus Kunststoff bestehenden und an dem Metallkörper (10) gehalterten Verkleidungsteil (19) sowie aus einem die Spaltbreite für den Durchlauf des Gurtbandes durch den Gurtführungsschlitz (13) begrenzenden Verdrängungskörper (26), wobei der Metallkörper (10) an seinem die Lauffläche ausbildenden unteren Steg (14) mit einem auswärts offenen C-förmigen Querschnitt ausgebildet ist, **dadurch gekennzeichnet, dass** das als einstückiger Körper mit den Metallkörper (10) wenigstens teilweise einfassenden Randbereichen (25) ausgebildete Verkleidungsteil (19) an seinem den unteren Steg (14) des Metallkörpers (10) einfassenden Teil eine Nut (23) zur Aufnahme der äußeren Wandung (16) des C-förmigen Querschnitts (15) aufweist, und dass das wenigstens in Teilbereichen nachgiebig ausgebildete Verkleidungsteil (19) bei der Montage aufbiegbar und über den Metallkörper (10) stülpbar ist derart, dass das Verkleidungsteil (19) in montiertem Zustand an dem Metallkörper (10) durch eine von den an dem Metallkörper (10) anliegenden Randbereichen (25) auf den Metallkörper (10) ausgeübte Vorspannung festlegbar ist.

2. Umlenkelement nach Anspruch 1, **dadurch gekennzeichnet, dass** an dem Verkleidungsteil (19) Klipshalterungen zur Festlegung des Verkleidungsteils (19) an dem Metallkörper (10) ausgebildet sind.

3. Umlenkelement nach Anspruch 2, **dadurch gekennzeichnet, dass** wenigstens ein Teil der den Metallkörper (10) einfassenden Randbereiche (25) selbst als Klipshalterungen ausgebildet ist.

4. Umlenkelement nach einem der Ansprüche 1 bis 3, **dadurch gekennzeichnet, dass** der Metallkörper (10) an seinem den Gurtführungsschlitz (13) zur Befestigungsöse (12) hin begrenzenden oberen Steg einen mehrfach gewinkelten Verlauf mit einem zentrisch in den Gurtführungsschlitz (13) vorstehenden Lappen (17) mit in einem Winkel von etwa 45 Grad zur Längsachse des Gurtführungsschlitzes (13) verlaufenden Begrenzungskanten (18) aufweist und der Verdrängungskörper (26) eine formentsprechende Kontur zur Abdeckung des die Befestigungsöse (12) aufnehmenden Bereichs (11) des Metallkörpers (10) einschließlich des Lappens (17) aufweist.

5. Umlenkelement nach Anspruch 4, **dadurch gekennzeichnet, dass** der Verdrängungskörper (26) in die Befestigungsöse (12) des Metallkörpers (10) hineinragende und eine Aufnahme für ein Befestigungsmittel ausbildende Vorsprünge (28) aufweist.

6. Umlenkelement nach einem der Ansprüche 1 bis 5, **dadurch gekennzeichnet, dass** der Verdrängungskörper (26) in seinem oberen, die Befestigungsöse (12) einfassenden Bereich über die Kontur des Metallkörpers (10) hervorstehenden Nasen (31) als Begrenzung des Drehweges des im Kraftfahrzeug eingebauten Umlenkelementes um das Befestigungsmittel aufweist.

7. Umlenkelement nach einem der Ansprüche 1 bis 6, **dadurch gekennzeichnet, dass** das Verkleidungsteil (19) in seinem die Befestigungsöse (12) umfassenden Bereich eine durch einen Schlitz (22) ausgebildete Teilung aufweist.

8. Umlenkelement nach einem der Ansprüche 1 bis 7, **dadurch gekennzeichnet, dass** der Verdrängungskörper (26) mit dem Metallkörper verklipst (Klipshalterungen 30, 32) ist.

9. Umlenkelement nach einem der Ansprüche 1 bis 6, **dadurch gekennzeichnet, dass** der Verdrängungskörper (26) mit dem Verkleidungsteil (19) einstückig ist.

## Claims

1. Deflector element for a safety belt in motor vehicles, consisting of a one-piece metal body (10) with a fixing eyelet (12) and a belt guidance slit (13) provided with a rounded running surface and of a lining part (19) consisting of plastic and held on the metal body (10) as well as of a displacement body (26) which limits the slit width for the running through of the belt strap through the belt guidance slit (13), whereby the metal body (10) is formed with a C-shaped cross-section open to the outside at its lower bar (14) forming the running surface, **characterised in that** the lining part (19) is formed as a one-piece body having edge areas (25) which at least partly enclose the metal body (10) and has a groove (23) for acceptance of the outer walls (16) of the C-shaped cross section (15) on its part which encloses the lower bar (14) of the metal body (10) and that the lining part (19) formed at least in partial areas so as to be yielding in nature can be bent open and fitted over the metal body (10) during assembly in such a way that the lining part (19) when in assembled state can be firmly positioned on the metal body (10) by means of a pretensioning effect exercised on the metal body (10) by the edge areas (25).

2. Deflector element according to Claim 1, **characterised in that** clip holders are formed on the lining part (19) for firm positioning of the lining part (19) on the metal body (10).

3. Deflector element according to Claim 2, **characterised in that** at least one part of the edge areas (25) enclosing the metal body (10) is itself formed as clip holders.

4. Deflector element according to any of the Claims 1 to 3, **characterised in that**, on its upper bar limiting the belt guidance slit (13) towards the fixing eyelet (12), the metal body (10) has a course which is angled several times with a tab (17) which projects centrally into the belt guidance slit (13) having limiting edges (18) running at an angle of approximately 45 degrees relative to the longitudinal axis of the belt guidance slit (13) and that the displacement body (26) has a correspondingly-shaped contour for covering the area (11) of the metal body (10) which includes the fixing eyelet (12) including the tab (17).

5. Deflector element according to Claim 4, **characterised in that** the displacement element (26) has projections (28) projecting into the fixing eyelet (12) of the metal body (10) and forming an acceptance for a fixing means.

6. Deflector element according to any of Claims 1 to 5, **characterised in that** in its upper area enclosing the fixing eyelet (12), the displacement body (26) has lobes (31) which project over the contour of metal body (10) as a limitation of the rotational path of the deflector element around the fixing means when built into the motor vehicle.

7. Deflector element according to any of Claims 1 to 6, **characterised in that**, in its area surrounding the fixing eyelet (12), the lining part (19) has a division formed by a slit (22).

8. Deflector element according to any of Claims 1 to 7, **characterised in that** the displacement body (26) is clipped (clip holders 30,32) with the metal body.

9. Deflector element according to any of Claims 1 to 6, **characterised in that** the displacement body (26) is formed in one piece with the lining part (19).

## Revendications

1. Elément déflecteur pour une ceinture de sécurité dans des véhicules automobiles, se composant d'un corps métallique (10) monobloc avec un oeillet de fixation (12) et avec une fente de guidage de ceinture (13) dotée d'une piste de roulement arrondie, et d'une partie d'habillage (19) en plastique maintenue au niveau du corps métallique (10) ainsi que d'un corps déplaceur (26) délimitant la largeur de fente pour le passage de la ceinture à travers la fente de guidage de ceinture (13), le corps métallique (10) étant réalisé au niveau de sa traverse inférieure (14) formant la piste de roulement, avec une section transversale en forme de C ouverte vers l'extérieur, **caractérisé en ce que** la partie d'habillage (19) réalisée sous forme de corps monobloc avec les zones de bord (25) bordant au moins en partie le corps métallique (10) présente au niveau de sa partie bordant la traverse inférieure (14) du corps métallique (10), une rainure (23) servant à recevoir la paroi extérieure (16) de la section transversale en forme de C (15), et **en ce que** la partie d'habillage (19) réalisée de manière souple au moins dans des parties de zones peut être relevée lors du montage et retournée sur le corps métallique (10) de telle sorte que la partie d'habillage (19) peut être fixée à l'état monté au niveau du corps métallique (10) par une précontrainte exercée sur le corps métallique par les zones de bord (25) s'appuyant contre le corps métallique (10).

2. Elément déflecteur selon la revendication 1, **caractérisé en ce que** des fixations clips sont réalisées au niveau de la partie d'habillage (19) pour fixer la partie d'habillage (19) sur le corps métallique (10).

3. Elément déflecteur selon la revendication 2, **caractérisé en ce qu'**au moins une partie des zones de bord (25) bordant le corps métallique (10) est réalisée elle-même sous forme de fixations clips.

4. Elément déflecteur selon l'une quelconque des revendications 1 à 3, **caractérisé en ce que** le corps métallique (10) présente au niveau de sa traverse supérieure délimitant la fente de guidage de ceinture (13) vers l'oeillet de fixation (12), une allure à plusieurs coudes avec des oreilles (17) en saillie de manière centrée dans la fente de guidage de ceinture (13) avec des arêtes de délimitation (18) s'étendant suivant un angle d'environ 45 degrés par rapport à l'axe longitudinal de la fente de guidage de ceinture (13) et le corps déplaceur (26) présente un contour de forme correspondante pour le recouvrement de la zone (11) recevant l'oeillet de fixation (12) du corps métallique (10) y compris de l'oreille (17).

5. Elément déflecteur selon la revendication 4, **caractérisé en ce que** le corps déplaceur (26) présente des saillies (28) pénétrant dans l'oeillet de fixation (12) du corps métallique (10) et formant un logement pour un moyen de fixation.

6. Elément déflecteur selon l'une quelconque des revendications 1 à 5, **caractérisé en ce que** le corps déplaceur (26) présente des nez (31) dépassant dans sa zone supérieure bordant l'oeillet de fixation (12) du contour du corps métallique (10) sous forme de limitation de la course de rotation de l'élément déflecteur monté dans le véhicule automobile autour du moyen de fixation.

7. Elément déflecteur selon l'une quelconque des revendications 1 à 6, **caractérisé en ce que** la partie d'habillage (19) présente dans sa zone entourant l'oeillet de fixation (12), une séparation formée par une fente (22).

8. Elément déflecteur selon l'une quelconque des revendications 1 à 7, **caractérisé en ce que** le corps déplaceur (26) est clipsé sur le corps métallique (fixations clips 30, 32).

9. Elément déflecteur selon l'une quelconque des revendications 1 à 6, **caractérisé en ce que** le corps déplaceur (26) forme une seule pièce avec la partie d'habillage (19).
